# FASCICULE DE BREVET EUROPEEN

(11) **EP 0 645 352 B1**
(45) Date de publication et mention de la délivrance du brevet: **17.06.1998**
(21) Numéro de dépôt: 94402051.0
(22) Date de dépôt: 14.09.1994
(51) Int. Cl.: C03C 17/36, G02B 1/10

(54) **Substrat transparent muni d'un empilement de couches minces agissant sur le rayonnement solaire et/ou infrarouge**
Transparentes Substrat mit einer Folge von dünnen Schichten mit Wirkung auf Sonnen- und/oder Infrarotstrahlung
Transparent substrate with a stack of thin layers acting on solar and/or infra-red radiation

(30) Priorité: 23.09.1993 FR 9311339
(43) Date de publication de la demande: 29.03.1995
(73) Titulaire: SAINT-GOBAIN VITRAGE, 92400 Courbevoie (FR)
(72) Inventeur: Guiselin, Olivier, F-75017 Paris (FR)
(74) Mandataire: Renous Chan, Véronique

(56) Documents cités:
- EP-A- 0 303 109
- EP-A- 0 332 717
- EP-A- 0 456 487
- WO-A-90/02653
- WO-A-90/05439
- DE-A- 4 211 363
- FR-A- 2 669 325
- GB-A- 2 027 925
- US-A- 5 071 206
- US-A- 5 229 881

## Description

L'invention concerne les substrats transparents, notamment en verre, qui sont revêtus d'un empilement de couches minces comprenant au moins une couche, notamment métallique, pouvant agir sur le rayonnement solaire et/ou sur le rayonnement infra-rouge.

L'invention concerne également l'utilisation de substrats ainsi revêtus pour fabriquer des vitrages, tout particulièrement adaptés à l'isolation thermique et/ou la protection solaire. Ces vitrages sont destinés aussi bien à équiper des bâtiments que des véhicules, en vue notamment de diminuer l'effort de climatisation et/ou de réduire toute surchauffe excessive entraînée par l'importance toujours grandissante des surfaces vitrées dans locaux ou habitacles.

Un type d'empilement de couches minces connu pour conférer aux substrats de telles propriétés est constitué d'une ou plusieurs couches métalliques comme des couches d'argent, intercalées par des couches en matériau diélectrique comme des couches d'oxyde métallique. Cet empilement est généralement obtenu par une succession de dépôts effectués par une technique utilisant le vide du type pulvérisation cathodique assistée par champ magnétique.

Augmenter le nombre des couches métalliques dans l'empilement permet d'optimiser la protection solaire, ce qui peut se traduire par une diminution du facteur solaire du vitrage. (On rappelle que le facteur solaire d'un vitrage est le rapport entre l'énergie totale entrant dans le local à travers le vitrage et l'énergie solaire incidente). Mais cela entraîne également, en parallèle, une diminution de la transparence du vitrage, traduite par une chute de la valeur de la transmission lumineuse T_{L} dudit vitrage.

Un compromis est donc à trouver entre performances anti-solaires et transparence, sans oublier la faisabilité industrielle d'un tel empilement.

Le brevet US-5 071 206 propose notamment un substrat sur lequel est déposé un empilement constitué de trois couches à base d'argent alternées avec quatre couches d'oxyde métallique comme de l'oxyde d'indium, les trois couches d'argent étant sensiblement d'épaisseurs égales bien que la couche "centrale" soit légèrement plus épaisse que les deux autres. Cependant, tant qu'un tel substrat n'est pas incorporé dans un vitrage feuilleté, la face du substrat revêtue de l'empilement se trouvant au contact du film intercalaire thermoplastique type polyvinylbutyral PVB, l'aspect en réflexion dudit substrat est peu esthétique : il apparaît, en réflexion, rougeâtre, couleur peu appréciée des architectes, et ce d'autant plus que la couleur est relativement intense.

Le but de l'invention est donc de pallier cet inconvénient en mettant au point un substrat revêtu d'un empilement comprenant au moins trois couches à propriétés de réflexion dans l'infra-rouge, notamment métalliques, et qui présente une haute sélectivité, c'est-à-dire un rapport T_{L}/FS le plus élevé possible pour une valeur de T_{L} donnée, tout en garantissant un aspect, notamment en réflexion extérieure, qui soit agréable à l'oeil, ceci que le substrat soit utilisé en tant que vitrage monolithique, incorporé dans un vitrage multiple isolant du type double-vitrage, ou même dans un vitrage feuilleté.

L'invention a pour objet un substrat transparent, notamment en verre, muni d'un empilement de couches minces comportant essentiellement successivement, en comptant à partir du substrat, une première couche de matériau diélectrique, une première couche à propriétés de réflexion dans l'infra-rouge, notamment métallique, une seconde couche de matériau diélectrique, une seconde couche à propriétés de réflexion dans l'infra-rouge, notamment métallique, une troisième couche de matériau diélectrique, puis enfin une troisième couche à propriétés de réflexion dans l'infra-rouge, notamment métallique surmontée d'une quatrième couche de matériau diélectrique. Les épaisseurs des trois couches à propriétés dans l'infra-rouge sont choisies, conformément à l'invention, de manière à ce que l'épaisseur de la troisième couche soit supérieure à celle de la seconde couche, elle même supérieure à celle de la première couche.

Cette dissymétrie dans les épaisseurs des trois couches à propriétés de réflexion dans l'infra-rouge, notamment métalliques, est de préférence ajustée de manière à ce que les rapports d'une part de l'épaisseur de la troisième couche sur celle de la seconde, d'autre part de l'épaisseur de la seconde couche sur celle de la première, soient compris entre 1,40 et 1,05 et de préférence entre 1,30 et 1,10.

Le fait que les couches à propriétés de réflexion dans l'infra-rouge se trouvent d'autant plus épaisses qu'elles se trouvent éloignées du substrat permet d'obtenir des vitrages à sélectivité très élevée, soit présentant un rapport T_{L}/FS d'au moins 1,8 voire 2 et plus. En modulant les épaisseurs des couches, on peut contrôler la transparence du vitrage, et obtenir des valeurs de T_{L} de l'ordre de 58 à 68 %, gamme adaptée tout particulièrement pour les vitrages destinés au bâtiment. De même, des facteurs solaires FS de l'ordre de 28 à 36 % peuvent être atteints.

Mais l'avantage majeur de l'invention est que ces bonnes performances en termes de protection solaire ne s'opèrent pas au détriment de l'aspect visuel du substrat.

En effet, qu'il soit utilisé comme vitrage monolithique ou incorporé dans un vitrage multiple type double-vitrage, le substrat revêtu de l'empilement de couches selon l'invention présente une coloration en réflexion extérieure agréable et douce, dans la gamme des bleus ou bleus-verts (valeurs de longueur d'onde dominante de l'ordre de 470 à 500 nanomètres). En outre, cette coloration paraît neutre, "lavée de blanc" et non brillante, ce qui est confirmé par notamment des valeurs de pureté en réflexion inférieures à 6 % et de réflexion extérieure R_{L} inférieures à 10 %.

Un dernier point : cet aspect visuel reste quasiment inchangé quel que soit l'angle d'incidence avec lequel le vitrage est observé. Cela signifie qu'un spectateur extérieur, au vu d'une façade d'un bâtiment entièrement équipée de tels vitrages, n'a pas l'impression d'une inhomogénéité significative de teinte, ou d'aspect, ce qui est très recherché des architectes actuellement.

Il est à noter qu'en réflexion intérieure les substrats montés en vitrages présentent également une couleur dans les bleus ou dans les bleus-verts, neutre et non brillante. Cela implique que, lorsqu'il fait sombre à l'extérieur d'un local éclairé et équipé avec de tels vitrages, une personne à l'intérieur du local voit ces vitrages colorés de manière agréable.

On optimise encore la colorimétrie des substrats selon l'invention si l'épaisseur des trois couches à propriétés de réflexion dans l'infra-rouge augmente progressivement et régulièrement, c'est-à-dire si le rapport de l'épaisseur de la troisième couche sur celle de la seconde et le rapport de l'épaisseur de la seconde couche sur celle de la première sont sensiblement égaux. On choisit de préférence ces rapports voisins de 1,13 à 1,15.

Le mode de réalisation préféré de l'invention consiste ainsi à choisir la première couche d'épaisseur 8 à 12 nanomètres, notamment 9,5, la seconde couche d'épaisseur 10 à 13 nanomètres, notamment 11, et enfin la troisième couche d'épaisseur environ 11 à 15 nanomètres, notamment 12,5.

Le choix des épaisseurs des quatre couches de matériau diélectrique n'est pas non plus indifférent. Ainsi, il est préférable que l'épaisseur de la quatrième couche de matériau diélectrique soit égale à celle de la première et éventuellement un peu plus importante, et ce dans un rapport compris entre 1 et 1,20.

De même, les épaisseurs des couches de matériaux diélectrique "intermédiaires", c'est-à-dire les seconde et troisième couches sont choisies de préférence voisines, notamment dans un rapport compris entre 0,9 et 1,1. Ces couches sont en outre choisies nettement plus épaisses que les première et quatrième couches.

Avantageusement, on choisit l'épaisseur de chacune des deuxième et troisième couches supérieure ou égale à la somme S des épaisseurs des première et quatrième couches, et notamment d'une valeur comprise entre le produit S x 1,1 et le produit S x 1,2.

Pour vérifier ces conditions, I'épaisseur de la première couche peut être choisie entre 27 et 34 nanomètres, et notamment égale à environ 27 ou 32 nanomètres. L'épaisseur de la seconde et de la troisième couche peut être choisie entre 70 et 80 nanomètres, et notamment égale à 72, 73 ou 77 nanomètres. L'épaisseur de la quatrième couche peut être choisie entre 32 et 37 nanomètres et être égale à 34 ou 35 nanomètres.

En termes de choix de matériaux, il est recommandé d'utiliser des couches à propriétés de réflexion dans l'infra-rouge qui soient en métal, tout particulièrement à base d'argent. Quant aux couches de matériau diélectrique, elles peuvent être en oxyde métallique comme l'oxyde de tantale, de zinc, ou d'étain, ou un mélange d'au moins deux de ces oxydes, chacun de ces oxydes présente ses avantages propres. Ainsi, l'oxyde d'étain ou de zinc peut être déposé avec des vitesses élevées quand est utilisée une technique de pulvérisation cathodique réactive, ce qui est industriellement très intéressant. Par contre, l'oxyde de tantale permet d'obtenir une durabilité accrue face aux agressions mécaniques ou chimiques. Il n'est pas non plus obligatoire de choisir le même oxyde pour toutes les couches de matériau diélectrique. Ainsi les deux ou trois premières couches peuvent être en oxyde d'étain, pour augmenter les cadences de fabrication, la dernière couche étant en oxyde de tantale pour protéger au mieux l'empilement. En outre, ce choix consistant à ce que les quatre couches de matériau diélectrique ne soient pas toutes du même oxyde permet avantageusement d'ajuster plus ou moins certains valeurs photométriques de l'empilement, notamment la valeur de T_{L} et/ou le facteur solaire F.S. et de moduler éventuellement sa colorimétrie.

Les couches en matériau diélectrique peuvent également être de nature différente, et notamment à base de sulfure tel que le sulfure de zinc Zns, qui se prête aisément à un dépôt en couche mince par des techniques d'évaporation sous vide. On peut ainsi déposer l'ensemble des couches de l'empilement soit par évaporation, soit par pulvérisation cathodique.

Il est à noter, par ailleurs, qu'il est préférable de surmonter chacune les couches à propriétés de réflexion dans l'infra-rouge, tout particulièrement lorsqu'elles sont métalliques, d'une fine couche "barrière" métallique, d'un métal autre que l'argent comme un alliage nickel-chrome, du tantale ou du titane et ceci notamment quand les couches de matériau diélectrique sont déposées par pulvérisation cathodique réactive en présence d'oxygène. Ces couches barrières protègent ainsi les couches sous-jacentes, en particulier métalliques, du contact avec l'oxygène en s'oxydant elles-même partiellement.

On peut également prévoir de déposer sous chacune des couches à propriétés de réflexion dans l'infra-rouge, une fine couche dite "d'accrochage" notamment destinée à en améliorer l'adhérence à la couche sous-jacente en matériau diélectrique. Ces couches d'accrochage sont notamment de même nature que les couches "barrière" ci-dessus évoquées, c'est-à-dire métallique et en un métal autre que l'argent et par exemple à base d'alliages du type nickel-chrome, ou à base de tantale ou de titane.

On note par ailleurs que la présence de ces couches "barrière" et/ou de ces couches "d'accrochage" peut permettre à l'empilement de couches dans son ensemble de mieux résister à des traitements thermiques ultérieurs que pourrait avoir à subir le substrat porteur, traitements du type recuit, bombage ou trempe.

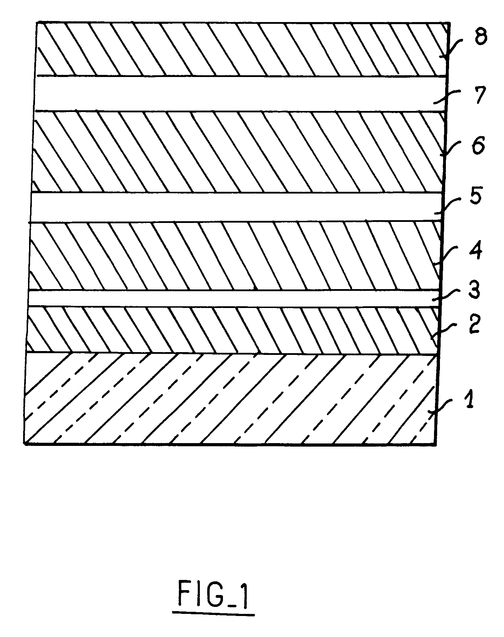

Les détails et caractéristiques avantageuses de l'invention ressortent des exemples suivants non limitatifs, illustrés à l'aide de la figure 1.

On précise que dans les deux exemples qui suivent, les dépôts successifs s'effectuent par pulvérisation cathodique assistée par champ magnétique, mais que toute autre technique de dépôt peut être envisagée dès lors qu'elle permet un bon contrôle des épaisseurs des couches à déposer. Les substrats sur lesquels sont déposés les empilements sont des substrats silico-sodo-calciques de 4 millimètres d'épaisseur. Ils sont ensuite assemblés en double-vitrage à un substrat identique mais nu par l'intermédiaire d'une lame de gaz de 10 millimètres.

La figure 1 représente l'empilement selon l'invention et ne respecte pas les proportions quant aux épaisseurs des couches afin que sa lecture soit facilitée. On y voit le substrat 1, les trois couches 3, 5, 7 à propriétés de réflexion dans l'infra-rouge, ici en argent et les quatre couches en matériau diélectrique, ici en oxyde d'étain ou de tantale 2, 4, 6, 8. Ne figurent pas les fines couches barrières en Ni-Cr au dessus de chacune des couches d'argent 3, 5, 7.

L'installation de dépôt comprend au moins une chambre de pulvérisation munie de cathodes équipées de cibles en matériaux appropriés sous lesquels le substrat 1 passe successivement. Ces conditions de dépôt par chacune des couches sont les suivantes :
- les couches 3, 5, 7, à base d'argent sont déposées à l'aide d'une cible en argent, sous une pression de 0,8 Pa dans une atmosphère d'argon,
- les couches 2, 4, 6, 8 lorsqu'elles sont à base de SnO₂, sont déposées par pulvérisation réactive à l'aide d'une cible d'étain, sous une pression de 0,8 Pa et dans une atmosphère argon/oxygène dont 36 % volumique d'oxygène,
- les couches 2, 4, 6, 8 lorsqu'elles sont à base de Ta₂O₅, sont déposées par pulvérisation réactive à l'aide d'une cible de tantale, sous une pression de 0,8 Pa et dans une atmosphère argon/oxygène dont environ 10 % en volume d'oxygène,
- les trois couches barrières à base de Ni-Cr sont déposées à l'aide d'une cible en alliage nickel-chrome, toujours sous la même pression et dans une atmosphère d'argon.

Les densités de puissance et les vitesses de défilement du substrat 1 sont ajustées de manière connue pour obtenir les épaisseurs de couche voulues.

L'exemple 1 concerne un tel empilement dont les quatre couches de diélectrique sont en oxyde d'étain, tandis que l'exemple 2 concerne un tel empilement dont les quatre couches de diélectrique sont en oxyde de tantale.

Le tableau 1 ci-dessous précise les épaisseurs en nanomètres des couches des deux empilements :

**TABLEAU 1**

| | **EXEMPLE 1** | **EXEMPLE 2** |
|---|---|---|
| Ta₂O₅ ou SnO₂ (2) | 32 | 29 |
| Ag (3) | 9,5 | 9,5 |
| Ni-Cr | 2 | 2 |
| Ta₂O₅ ou SnO₂ (4) | 77 | 73 |
| Ag (5) | 11 | 11 |
| Ni-Cr | 2 | 2 |
| Ta₂O₅ ou SnO₂ (6) | 77 | 72 |
| Ag (7) | 12,5 | 12,5 |
| Ni-Cr | 2 | 2 |
| Ta₂O₅ ou SnO₂ (8) | 35 | 34 |

Le tableau 2 ci-dessous indique pour chacun des deux exemples les valeurs de transmission lumineuse T_{L} en pourcentage, de facteur solaire FS calculé selon la norme DIN 67 507 (Annexe A 233) en pourcentage, de réflexions lumineuses extérieure et intérieure R_{L}-ext et R_{L}-int en pourcentage, ainsi que les longueurs d'onde dominantes en nanomètres Lambda-int et Lambda-ext et les puretés en pourcentage p-ext et p-int qui y sont associées : (valeurs mesurées sur le substrat monté en double-vitrage et en référence à l'illuminant D₆₅).

**TABLEAU 2**

| | **EXEMPLE 1** | **EXEMPLE 2** |
|---|---|---|
| T_{L} | 59 | 62 |
| FS | 30 | 34 |
| R_{L}-ext | 8,9 | 9,8 |
| Lambda-ext | 499 | 485 |
| p-ext | 1 | 6 |
| Rₗ-int | 10,8 | 10,7 |
| Lambda-int | 501 | 475 |
| p-int | 1 | 3 |

De ce dernier tableau, peuvent être tirées les conclusions suivantes :

Les vitrages selon l'invention présentent un rapport T_{L}/FS élevé, voisin de 2, et offrent donc une bonne protection solaire dans une gamme de transmissions lumineuses particulièrement adaptée pour équiper les bâtiments.

Par ailleurs, les teintes en réflexions intérieure et extérieure restent dans la gamme des bleus-verts, couleurs appréciées sur le plan esthétique. Ces couleurs sont très neutres, puisqu'elles possèdent des puretés au pire de 6 % et des valeurs de réflexion restant inférieures à ou proches de 10 %.

De plus, ces vitrages ne voient pas leur aspect en réflexion modifié de manière perceptible si l'angle sous lequel on les observe varie.

## Revendications

1. Substrat transparent (1), notamment en verre, muni d'un empilement de couches minces comportant essentiellement successivement à partir du substrat :
• une première couche de matériau diélectrique (2)
• une première couche à propriétés de réflexion dans l'infra-rouge, notamment métallique (3)
• une seconde couche de matériau diélectrique (4)
• une seconde couche à propriétés de réflexion dans l'infra-rouge, notamment métallique (5)
• une troisième couche de matériau diélectrique (6)
• une troisième couche à propriétés de réflexion dans l'infra-rouge, notamment métallique (7)
• une quatrième couche de matériau diélectrique (8),
**caractérisé en ce que** l'épaisseur de la troisième couche à propriétés de réflexion dans l'infra-rouge (7) est supérieure à celle de la seconde couche à propriétés de réflexion dans l'infra-rouge (5) **et en ce que** l'épaisseur de la seconde couche à propriétés dans l'infra-rouge est supérieure à celle de la première couche à propriétés dans l'infra-rouge (3).

2. Substrat selon la revendication 1, **caractérisé en ce que** les rapports de l'épaisseur de la troisième couche à propriétés de réflexion dans l'infra-rouge (7) sur celle de la seconde couche à mêmes propriétés (5) et de l'épaisseur de ladite seconde couche (5) sur celle de la première couche à mêmes propriétés (3) sont compris entre 1,40 et 1,05, de préférence entre 1,30 et 1,10.

3. Substrat selon l'une des revendications précédentes **caractérisé en ce que** le rapport de l'épaisseur de la troisième couche à propriétés dans l'infra-rouge (7) sur celle de la seconde couche à propriétés dans l'infra-rouge (5) et le rapport de l'épaisseur de ladite seconde couche (5) sur celle de la première couche à propriétés dans l'infra-rouge (3) sont sensiblement égaux, et notamment d'environ 1,13 à 1,15.

4. Substrat selon l'une des revendications précédentes **caractérisé en ce que** l'épaisseur de la première couche à propriétés dans l'infra-rouge (3) est d'environ 8 à 12 nanomètres, notamment de 9,5 nanomètres.

5. Substrat selon l'une des revendications précédentes **caractérisé en ce que** l'épaisseur de la seconde couche à propriétés dans l'infra-rouge (5) est d'environ 10 à 13 nanomètres, notamment de 11 nanomètres.

6. Substrat selon l'une des revendications précédentes **caractérisé en ce que** l'épaisseur de la troisième couche à propriétés dans l'infra-rouge (7) est d'environ 11 à 15 nanomètres, notamment de 12,5 nanomètres.

7. Substrat selon l'une des revendications précédentes, **caractérisé en ce que** le rapport de l'épaisseur de la quatrième couche de diélectrique (8) sur celle de la première couche de diélectrique (2) est compris entre 1 et 1,20.

8. Substrat selon l'une des revendications précédentes, **caractérisé en ce que** le rapport de l'épaisseur de la troisième couche de diélectrique (6) sur celle de la seconde couche de diélectrique (4) est compris entre 0,9 et 1,1.

9. Substrat selon l'une des revendications précédentes, **caractérisé en ce que** l'épaisseur de chacune des deuxième (4) et troisième (6) couches de diélectrique est supérieure ou égale à la somme S des épaisseurs des première (2) et quatrième (8) couches de diélectrique, et est notamment comprise entre le produit S x 1,1 et le produit S x 1,2.

10. Substrat selon l'une des revendications précédentes, **caractérisé en ce que** l'épaisseur de la première couche de diélectrique (2) est comprise entre 27 et 34 nanomètres, celle de la seconde couche de diélectrique (4) et de la troisième couche de diélectrique (6) entre 70 et 80 nanomètres, et celle de la quatrième couche de diélectrique (8) entre 32 et 37 nanomètres.

11. Substrat selon l'une des revendications précédentes, **caractérisé en ce que** les couches à propriétés dans l'infra-rouge (3, 5, 7) sont en métal et notamment à base d'argent.

12. Substrat selon l'une des revendications précédentes, **caractérisé en ce que** les couches en matériau diélectrique (2, 4, 6, 8) sont en oxyde(s) métallique(s) comme l'oxyde d'étain, l'oxyde de tantale, ou l'oxyde de zinc, ou en sulfure métallique comme le sulfure de zinc.

13. Substrat selon l'une des revendications précédentes, **caractérisé en ce que** chacune des couches à propriétés de réflexion dans l'infra-rouge (3, 5, 7) est surmontée d'une fine couche "barrière" métallique partiellement oxydée, notamment à base d'alliage nickel-chrome, de tantale ou de titane.

14. Substrat selon l'une des revendications précédentes, **caractérisé en ce que** chacune des couches à propriétés de réflexion dans l'infra-rouge (3, 5, 7) est disposée sur une fine couche d'"accrochage" métallique, notamment à base d'alliage nickel-chrome, de tantale ou de titane.

15. Vitrage, notamment multiple tel qu'un double-vitrage, incorporant le substrat défini conformément aux revendications précédentes.

16. Vitrage selon la revendication 15, **caractérisé en ce qu**'il présente une sélectivité d'au moins 1,8 et notamment d'environ 2.

17. Vitrage selon l'une des revendications 15 ou 16, **caractérisé en ce qu**'il présente une transmission lumineuseT_{L} de 58 à 68 % et un facteur solaire FS de 28 à 36 %.

18. Vitrage selon l'une des revendications 15 à 17, **caractérisé en ce qu**'il présente en réflexions lumineuses intérieure et extérieure une couleur neutre dans la gamme des bleus ou bleus-verts, avec notamment des valeurs de pureté inférieures ou égales à 6 % et des longueurs d'onde dominante de l'ordre de 470 à 500 nanomètres **et en ce que** son aspect visuel reste quasiment inchangé quel que soit l'angle d'incidence avec lequel il est observé.

## Claims

1. Transparent substrate (1), particularly of glass, provided with a stack of films essentially successively comprising as from the substrate:
a first, dielectric material film (2),
a first, particularly metallic film having reflection properties in the infrared,
a second, dielectric material film (4),
a second, particularly metallic film (5) having reflection properties in the infrared,
a third, dielectric material film (6),
a third, particularly metallic film (7) having reflection properties in the infrared,
a fourth, dielectric material film (8),
characterized in that the thickness of the third film (7) having reflection properties in the infrared exceeds that of the second film (5) having reflection properties in the infrared and in that the thickness of the second film having reflection properties in the infrared exceeds that of the first film (3) having reflection properties in the infrared.

2. Substrate according to claim 1, characterized in that the ratios of the thickness of the third film (7) having reflection properties in the infrared to that of the second film (5) having the same properties and the thickness of the second film (5) to that of the first film (3) having the same properties are between 1.40 and 1.05, preferably between 1.30 and 1.10.

3. Substrate according to one of the preceding claims, characterized in that the ratio of the thickness of the third film (7) having properties in the infrared to that of the second film (5) having properties in the infrared and the ratio of the thickness of the second film (5) to that of the first film (3) having properties in the infrared are substantially equal and in particular approximately 1.13 to 1.15.

4. Substrate according to one of the preceding claims, characterized in that the thickness of the first film (3) having properties in the infrared is approximately 8 to 12 nanometres, particularly 9.5 nanometres.

5. Substrate according to one of the preceding claims, characterized in that the thickness of the second film (5) having properties in the infrared is approximately 10 to 13 nanometres, particularly 11 nanometres.

6. Substrate according to one of the preceding claims, characterized in that the thickness of the third film (7) having properties in the infrared is approximately 11 to 15 nanometres, particularly 12.5 nanometres.

7. Substrate according to one of the preceding claims, characterized in that the ratio of the thickness of the fourth dielectric film (4) to that of the first dielectric film (2) is between 1 and 1.20.

8. Substrate according to one of the preceding claims, characterized in that the ratio of the thickness of the third dielectric film (6) to that of the second dielectric film (4) is between 0.9 and 1.1.

9. Substrate according to one of the preceding claims, characterized in that the thickness of each of the second (4) and third (6) dielectric films is equal to or greater than the sum S of the thicknesses of the first (2) and fourth (8) dielectric films and is in particular between the product S x 1.1 and the product S x 1.2.

10. Substrate according to one of the preceding claims, characterized in that the thickness of the first dielectric film (2) is between 27 and 34 nanometres, that of the second dielectric film (4) and that of the third dielectric film (6) between 70 and 80 nanometres, and that of the fourth dielectric film (8) between 32 and 37 nanometres.

11. Substrate according to one of the preceding claims, characterized in that the films (3, 5, 7) having properties in the infrared are of metal and in particular based on silver.

12. Substrate according to one of the preceding claims, characterized in that the dielectric material films (2, 4, 6, 8) are of metal oxide or oxides, such as tin oxide, tantalum oxide, or zinc oxide, or a metallic sulphide such as zinc sulphide.

13. Substrate according to one of the preceding claims, characterized in that each of the films (3, 5, 7) having reflection properties in the infrared is surmounted by a thin, partly oxidized, metallic "barrier" film, particularly based on nickel-chrome, tantalum or titanium alloy.

14. Substrate according to one of the preceding claims, characterized in that each of the films (3, 5, 7) having reflection properties in the infrared is placed on a thin, metallic "attachment" film, particularly based on nickel-chrome, tantalum or titanium alloy.

15. Glazing, particularly multiple glazing such as a double glazing, incorporating the substrate defined in the preceding claims.

16. Glazing according to claim 15, characterized in that it has a selectivity of at least 1.8 and in particular approximately 2.

17. Glazing according to one of the claims 15 or 16, characterized in that it has a light transmission T_{L} of 58 to 68% and a solar factor FS of 28 to 36%.

18. Glazing according to one of the claims 15 to 17, characterized in that in internal and external light reflections, it has a neutral colour in the blue or blue-green range, with in particular purity values equal to or below 6% and dominant wavelengths of approximately 470 to 500 nanometres and in that its visual appearance remains virtually unchanged no matter what the angle of incidence with which it is observed.

## Patentansprüche

1. Transparentes Substrat (1), welches insbesondere aus Glas besteht und mit einem Aufbau aus dünnen Schichten versehen ist, der im Wesentlichen auf dem Substrat übereinander
- eine erste Schicht (2) aus dielektrischem Material,
- eine speziell metallische erste Schicht (3) mit Reflexionsvermögen im Infrarot,
- eine zweite Schicht (4) aus dielektrischem Material,
- eine speziell metallische zweite Schicht (5) mit Reflexionsvermögen im Infrarot,
- eine dritte Schicht (6) aus dielektrischem Material,
- eine speziell metallische dritte Schicht (7) mit Reflexionsvermögen im Infrarot und
- eine vierte Schicht (8) aus dielektrischem Material
umfaßt, **dadurch gekennzeichnet, daß** die Dicke der dritten Schicht (7) mit Reflexionsvermögen im Infrarot größer als die der zweiten Schicht (5) mit Reflexionsvermögen im Infrarot ist **und daß** die Dicke der zweiten Schicht mit Eigenschaften im Infrarot größer als die der ersten Schicht (3) mit Eigenschaften im Infrarot ist.

2. Substrat nach Anspruch 1, **dadurch gekennzeichnet, daß** das Verhältnis der Dicke der dritten Schicht (7) mit Reflexionsvermögen im Infrarot zu der der zweiten Schicht (5) mit denselben Eigenschaften und das der Dicke dieser zweiten Schicht (5) zu der der ersten Schicht (3) mit denselben Eigenschaften 1,40 bis 1,05 und vorzugsweise 1,30 bis 1,10 beträgt.

3. Substrat nach einem der vorhergehenden Ansprüche, **dadurch gekennzeichnet, daß** das Verhältnis der Dicke der dritten Schicht (7) mit Eigenschaften im Infrarot zu der der zweiten Schicht (5) mit Eigenschaften im Infrarot und das Verhältnis der Dicke dieser zweiten Schicht (5) zu der der ersten Schicht (3) mit Eigenschaften im Infrarot im wesentlichen gleich sind und insbesondere etwa 1,13 bis 1,15 betragen.

4. Substrat nach einem der vorhergehenden Ansprüche, **dadurch gekennzeichnet, daß** die Dicke der ersten Schicht (3) mit Eigenschaften im Infrarot etwa 8 bis 12 Nanometer und insbesondere 9,5 Nanometer beträgt.

5. Substrat nach einem der vorhergehenden Ansprüche, **dadurch gekennzeichnet, daß** die Dicke der zweiten Schicht (5) mit Eigenschaften im Infrarot etwa 10 bis 13 Nanometer und insbesondere 11 Nanometer beträgt.

6. Substrat nach einem der vorhergehenden Ansprüche, **dadurch gekennzeichnet, daß** die Dicke der dritten Schicht (7) mit Eigenschaften im Infrarot etwa 11 bis 15 Nanometer und insbesondere 12,5 Nanometer beträgt.

7. Substrat nach einem der vorhergehenden Ansprüche, **dadurch gekennzeichnet, daß** das Verhältnis der Dicke der vierten dielektrischen Schicht (8) zu der der ersten dielektrischen Schicht (2) 1 bis 1,20 beträgt.

8. Substrat nach einem der vorhergehenden Ansprüche, **dadurch gekennzeichnet, daß** das Verhältnis der Dicke der dritten dielektrischen Schicht (6) zu der der zweiten dielektrischen Schicht (4) 0,9 bis 1,1 beträgt.

9. Substrat nach einem der vorhergehenden Ansprüche, **dadurch gekennzeichnet, daß** die jeweilige Dicke der zweiten (4) und dritten dielektrischen Schicht (6) größer oder gleich der Summe S aus der Dicke der ersten (2) und vierten dielektrischen Schicht (8) und insbesondere gleich dem Produkt von S x 1,1 bis S x 1,2 ist.

10. Substrat nach einem der vorhergehenden Ansprüche, **dadurch gekennzeichnet, daß** die Dicke der ersten dielektrischen Schicht (2) 27 bis 34 Nanometer, die der zweiten dielektrischen Schicht (4) und der dritten dielektrischen Schicht (6) 70 bis 80 Nanometer und die der vierten dielektrischen Schicht (8) 32 bis 37 Nanometer beträgt.

11. Substrat nach einem der vorhergehenden Ansprüche, **dadurch gekennzeichnet, daß** die Schichten (3, 5, 7) mit Eigenschaften im Infrarot aus Metall bestehen und insbesondere Silber als Grundlage haben.

12. Substrat nach einem der vorhergehenden Ansprüche, **dadurch gekennzeichnet, daß** die Schichten (2, 4, 6, 8) aus dielektrischem Material aus Metalloxid/en wie Zinnoxid, Tantaloxid oder Zinkoxid oder aus Metallsulfid wie Zinksulfid bestehen.

13. Substrat nach einem der vorhergehenden Ansprüche, **dadurch gekennzeichnet, daß** die Schichten (3, 5, 7) mit Reflexionsvermögen im Infrarot jeweils mit einer feinen metallischen Getterschicht, die teilweise aufoxidiert ist und insbesondere eine Chromnickellegierung, Tantal oder Titan als Basis hat, überzogen sind.

14. Substrat nach einem der vorhergehenden Ansprüche, **dadurch gekennzeichnet, daß** die jeweilige Schicht (3, 5, 7) mit Reflexionsvermögen im Infrarot auf einer feinen metallischen Haftschicht, insbesondere auf der Basis von einer Nickelchromlegierung, Tantal oder Titan, angeordnet ist.

15. Verglasung, insbesondere eine mehrfache wie eine Doppelverglasung, welche das gemäß den vorhergehenden Ansprüchen definierte Substrat enthält.

16. Verglasung nach Anspruch 15, **dadurch gekennzeichnet, daß** sie eine Selektivitätskennzahl von mindestens 1,8 und insbesondere von etwa 2 aufweist.

17. Verglasung nach Anspruch 15 oder 16, **dadurch gekennzeichnet, daß** sie einen Lichttransmissionsgrad T_{L} von 58 bis 68 % und einen Gesamtenergiedurchlaßgrad g von 28 bis 36 % besitzt.

18. Verglasung nach einem der Ansprüche 15 bis 17, **dadurch gekennzeichnet, daß** sie unter von innen und von außen auffallendem reflektiertem Licht eine im blauen oder blaugrünen Bereich neutrale Färbung mit insbesondere Werten des spektralen Farbanteils von kleiner oder gleich 6 % und der dominierenden Wellenlänge von etwa 470 bis 500 Nanometern aufweist **und daß** ihr visuelles Erscheinungsbild unabhängig vom Einfallswinkel, bei welchem sie betrachtet wird, fast unverändert bleibt.
